Europäisches Patentamt

European Patent Office

Office européen des brevets

(19)

(11) Veröffentlichungsnummer : **0 182 997**
**B1**

(12) # EUROPÄISCHE PATENTSCHRIFT

(45) Veröffentlichungstag der Patentschrift :
**15.03.89**

(51) Int. Cl.⁴ : **G 01 B  7/00**

(21) Anmeldenummer : **85112055.0**

(22) Anmeldetag : **24.09.85**

(54) **Messanordnung.**

(30) Priorität : **27.11.84 DE 3443133**

(43) Veröffentlichungstag der Anmeldung :
**04.06.86 Patentblatt 86/23**

(45) Bekanntmachung des Hinweises auf die Patenterteilung : **15.03.89 Patentblatt 89/11**

(84) Benannte Vertragsstaaten :
**AT CH DE FR GB IT LI NL SE**

(56) Entgegenhaltungen :
**DE–A– 3 330 325**
**DE–B– 2 726 312**
**DE–B– 2 831 939**
**FR–A– 2 520 498**
**FR–A– 2 522 407**
**GB–A– 2 136 966**

(73) Patentinhaber : **Dr. Johannes Heidenhain GmbH**
**Nansenstrasse 17**
**D-8225 Traunreut (DE)**

(72) Erfinder : **Kraus, Heinz**
**Traunring 74e**
**D-8225 Traunreut (DE)**

## Beschreibung

Die Erfindung betrifft eine Meßanordnung gemäß dem Oberbegriff des Anspruchs 1.

Es sind bereits Meßanordnungen bekannt, bei denen der piezoelektrische Effekt zur Umwandlung einer mechanischen Meßgröße in elektrische Meßsignale ausgenutzt wird.

In der DE-PS 32 03 933 ist eine Anordnung beschrieben, bei der eine Welle mit zumindest einem Stift oder einem Nocken versehen ist, der auf eine, einem Piezo-Keramikkörper zugeordnete Feder derart einwirkt, daß bei einer Wellendrehung am Piezo-Keramikkörper Meßsignale erzeugt werden, die von der Winkelposition der Welle abhängig sind.

Bei dieser Meßanordnung wird die Auflösung bestimmt durch den Stift- bzw. Nockenabstand. Eine derartige Einrichtung ist nicht ohne erheblichen Mehraufwand an Bauteilen auf Linearmeßsysteme zu übertragen.

Die DE-B 33 16 581 zeigt eine Einrichtung zur Vermessung der Einspritzstrahlen von Hochdruck-Einspritzventilen hinsichtlich der Strahlmenge und der Strahllage. Unter anderem sind zwei streifenförmige Sensoren in V-Anordnung in einem rotationssymmetrischen Aufnahmeraum drehbar vorgesehen. Die Strahllage wird aus dem Austrittsort an der Einspritzdüse und dem Auftreffort an den Sensoren im Aufnahmeraum im Zusammenwirken mit Winkelsignalen eines Drehlagengebers ermittelt. Es wird auch aufgezeigt, daß der Aufnahmeraum mit einzelnen Sensoren mosaikartig bestückt werden kann, welche einzeln mit nach außen führenden Anschlüssen versehen sein müssen, um die Strahllage zu erfassen. Alle diese offenbarten Anordnungen sind nicht zum Erfassen der Lageveränderung zweier relativ zueinander beweglicher Objekte geeignet.

Die DE-B 28 31 939 zeigt einen Meßwertaufnehmer mit einem piezoelektrischen Meßelement zur Messung mechanischer Größen an Hohlkörpern. Ein Schichtenpaket ist an der Außenfläche eines Rohres angebracht und eine elektrisch leitende Kontaktfläche des piezoelektrischen Films im Schichtenpaket ist in mehrere elektrisch voneinander getrennte parallel zueinander verlaufende Streifen unterteilt, wodurch sich die Bewegung eines Körpers in dem Rohr ermitteln läßt. Zur Beeinflussung des piezoelektrischen Materials ist viel Kraft erforderlich, da der bewegte Körper im Rohr zuerst das Rohr selbst dehnen muß und die Kraft über die relativ dicke und träge Rohrwandung auf das piezoelektrische Material übertragen wird.

Der Erfindung liegt die Aufgabe zugrunde, eine piezoelektrische Meßanordnung der eingangs genannten Art anzugeben, durch welche eine hohe Auflösung mit relativ einfachen baulichen Mitteln und eine störsichere, kompakte Anordnung erreicht wird.

Diese Aufgabe wird durch die Merkmale der Meßanordnung nach Anspruch 1 gelöst.

Die mit der Erfindung erzielten Vorteile bestehen insbesondere darin, daß die Strukturierung mit üblichen Mitteln bekannter Art möglich wird, da die Teilung in Form einer dünnen Schicht im Schichtenpaket integriert ist, und somit eine hohe Auflösung kostengünstig realisierbar ist. Durch dieses Integrieren der teilungsbildenden dünnen Schicht in das Schichtenpaket ist es möglich, mehrere Teilungselemente gleichzeitig zu beeinflussen und ohne ein zu regelndes Primärsignal ein gut auswertbares Meßsignal zu erhalten. Des weiteren ist durch die Möglichkeit, das Schichtenpaket aus dünnen Schichten aufzubauen, eine leicht beeinflußbare und durch die Verwendung eines magnetischen kraftausübenden Elementes eine berührungslose Abtastung realisierbar.

Die Erfindung wird durch Ausführungsbeispiele anhand der Zeichnungen näher erläutert.

Bei Figur 1 bis 3 dienen Magnete als kraftausübende Elemente. Es zeigt

Figur 1 einen Ausschnitt einer Linearmeßanordnung gemäß Erfindung,

Figur 2 den Schnitt einer Rotationsmeßanordnung entlang des Schnittverlaufs II-II und

Figur 3 die Draufsicht der Rotationsmeßanordnung gemäß Figur 2.

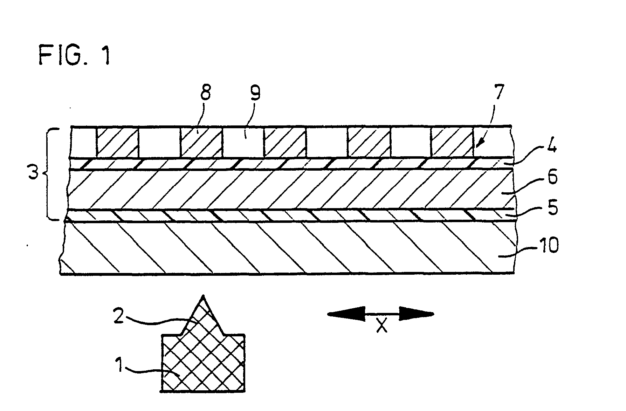

In Figur 1 ist schematisch ein Ausschnitt einer Linearmeßanordnung mit einem strukturierten Magneten 1 als kraftausübendes Element gezeigt. Die Strukturierung des Magneten 1 erfolgt durch einen erhabenen Magnetpol 2. Dem Magnet 1 ist ein Schichtenpaket 3 relativ beweglich in Meßrichtung X zugeordnet. Dieser Magnet 1 ist in nicht gezeigter Weise mit dem Werkzeugschlitten einer Werkzeugmaschine verbunden, wobei das Schichtenpaket 3 relativ dazu fest an der Werkzeugmaschine angebracht ist. Das Schichtenpaket 3 besteht aus zwei Kontaktschichten 4, 5 mit einer dazwischenliegenden Schicht aus piezoelektrischem Material 6. Auf der Kontaktschicht 4 ist eine teilungsbildende Schicht 7 angeordnet, die aus ferro- oder paramagnetischem Material besteht. Dabei wird die Teilung durch magnetisch beeinflußbare und nicht beeinflußbare Bereiche 8 und 9 gebildet, die wechselweise angeordnet sind. Als Widerlager dient dem kompletten Schichtenpaket 3 eine Abstützschicht 10. Erfolgt eine Relativbewegung zwischen Magnetpol 2 und dem Schichtenpaket 3 in Meßrichtung X, so durchlaufen die magnetisch beeinflußbaren Bereiche 8 und nicht beeinflußbaren Bereiche 9 wechselweise hohe Feldliniendichten, wodurch die magnetisch beeinflußbaren Bereiche 8 senkrecht zur Teilungsebene ausgelenkt werden. Dadurch wird das piezoelektrische Material 6 abwechselnd deformiert und an den Kontaktschichten 4,5 kann eine proportional zur Druckänderung modulierte Piezo-Spannung als Meßsignal abgegriffen werden.

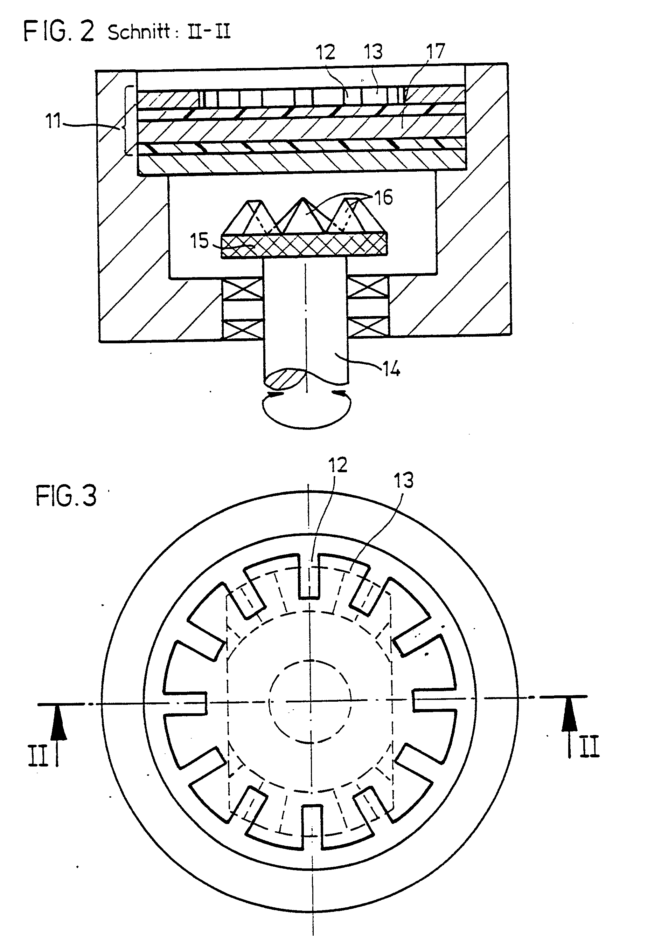

In Figur 2 und 3 wird das Prinzip der Anordnung gemäß Figur 1 auf ein Rotationsmeßsystem übertragen.

Der Aufbau des Schichtenpaketes 11 entspricht

sinngemäß dem Aufbau aus Figur 1, nur daß in diesem Fall die magnetisch beeinflußbaren und nicht beeinflußbaren Bereiche 12 und 13 als teilungsbildende Schicht auf einem Kreis angeordnet sind. Ein auf einer Welle 14 angebrachter drehbarer Magnet 15 weist mehrere Magnetpole 16 auf. Bei Drehung des Magneten 15 gegenüber dem Schichtenpaket ·11 drücken die zungenartig ausgebildeten magnetisch beeinflußbaren Bereiche 12 infolge der Magneteinwirkung auf das abgestützte piezoelektrische Material 17.

Durch die Verwendung eines Magneten 15 mit mehreren Magnetpolen 16 werden mehrere magnetisch beeinflußbare Bereiche 12 gleichzeitig gegen das piezoelektrische Material 17 gedrückt, wodurch eine Verstärkung des Meßsignals und ein Ausgleich von Fertigungstoleranzen (Mittelung) erreicht wird. Die Magnetpole 16 können durch Verzahnung einer Oberfläche des Magneten 15, durch Einsetzen von Magnetplättchen, durch Aufbringen einer magnetisch unstetigen Schicht oder direkt aus einem Bariumtitanat Pressling hergestellt werden.

Es ist möglich, daß die Teilung gleichzeitig
von den Kontaktschichten
vom piezoelektrischen Material
von der Abstützschicht
von einer zusätzlich eingebrachten Schicht verkörpert wird. Als Fertigungsverfahren zur Herstellung der Teilung bieten sich bevorzugt lithographische Verfahren, Ätzverfahren oder galvanische Aufbringungsverfahren an.

Versetzte Signale zur Richtungserkennung und/oder codierte Meßsignale erhält man durch die Verwendung nebeneinander liegender elektrisch voneinander isolierter teilungsverkörpernder Kontaktschichten, die separat kontaktiert sind ; oder durch die separate Kontaktierung einzelner isolierter Teilungselemente.

Die an den Oberflächen des piezoelektrischen Materials erzeugten positionsabhängigen Ladungsänderungen werden durch die Kontaktschichten oder direkt über die leitend ausgebildete Abstützschicht und die teilungsbildende Schicht nach außen geführt.

Die Kontaktschichten können aufgedampft werden, können aus leitfähigem Lack, aus leitfähiger Folie bestehen oder galvanisch aufgebaut sein.

Um Störschwingungen z. B. von einer Werkzeugmaschine herrührend zu eliminieren, ist es vorteilhaft, in das Schichtenpaket elastische Klebeschichten einzubringen. Diese Klebeschichten können auch gleichzeitig — als leitende Schichten ausgeführt — zur Kontaktierung dienen.

Durch den Aufbau mehrerer Schichten aus piezoelektrischem Material und/oder mehrerer teilungsbildender Schichten ist es möglich, stärkere positionsabhängige Meßsignale zu erzeugen. Ein solcher Aufbau kann auch zur Erzeugung versetzter Meßsignale zur Richtungserkennung und/oder zur Codierung eingesetzt werden, indem die Teilungsperioden der teilungsbildenden Schichten gleich sind, und die Teilungen dieser aufeinander aufgebauten Schichten um einen bestimmten Betrag in der Meßrichtung versetzt sind. Codierte Signale und kleine Auflösungsschritte werden auch durch die Verwendung von mehreren teilungsbildenden Schichten unterschiedlicher Teilungsperioden erreicht.

**Patentansprüche**

1. Meßanordnung zum Erfassen der Lageveränderung zweier zueinander beweglicher Objekte durch Deformation von piezoelektrischem Material (6, 17), bei der durch die Relativbewegung zwischen einem Sensor und einem auf diesen Sensor einwirkenden kraftausübenden Element (1, 15) positionsabhängige Signale erzeugt werden, wobei der Sensor als Schichtenpaket (3, 11) in Form einer Maßverkörperung ausgebildet ist und zumindest eine als Teilung strukturierte Schicht (7) integraler Bestandteil des Schichtenpaketes (3, 11) ist, dadurch gekennzeichnet, daß das kraftausübende Element ein magnetisches Element (1, 15) ist, das auf die teilungsbildende Schicht (7) wirkt und daß diese teilungsbildende Schicht (7) aus, in Bewegungsrichtung des magnetischen Elements (1, 15) abwechselnd angeordneten magnetisch beeinflußbaren und nicht beeinflußbaren Bereichen (8, 12 und 9, 13) besteht, so daß die magnetisch beeinflußbaren Bereiche (8, 13) auf das als Schicht ausgebildete piezoelektrische Material (6, 17) wirkt und dieses deformiert.

2. Meßanordnung nach Anspruch 1, dadurch gekennzeichnet, daß die teilungsbildende Schicht (7) des Schichtenpaketes (3, 11) eine inkrementale Teilung ist und das magnetische Element (1, 15) ebenfalls eine Teilung trägt, deren Teilungsperiode gleich der Teilung des Schichtenpaketes (3, 11) oder ein Vielfaches der Teilungsperiode des Schichtenpaketes (3, 11) ist.

3. Meßanordnung nach Anspruch 1, dadurch gekennzeichnet, daß das Schichtenpaket (3) aus zwei elektrisch leitenden Kontaktschichten (4, 5) mit einer, zwischen diesen Kontaktschichten (4, 5) liegenden Schicht aus piezoelektrischem Material (6) besteht und daß an einer der Außenseiten dieser Kontaktschichten (4, 5) die teilungsbildende Schicht (7) mit den magnetisch beeinflußbaren und nicht beeinflußbaren Bereichen (8 und 9) angeordnet ist.

4. Meßanordnung nach Anspruch 3, dadurch gekennzeichnet, daß auf einer elektrisch leitenden Kontaktschicht (4) auf der Seite, die der Schicht aus piezoelektrischem Material (6) abgewandt ist, die teilungsbildende Schicht (7) und auf der anderen elektrisch leitenden Kontaktschicht (5) auf der Seite, die der Schicht aus piezoelektrischem Material (6) abgewandt ist, eine Abstützschicht (10) vorgesehen ist.

5. Meßanordnung nach Anspruch 1, dadurch gekennzeichnet, daß das piezoelektrische Material zwischen einer elektrisch leitenden Abstützschicht und einer elektrisch leitenden teilungsbildenden Schicht angeordnet ist und die, an den Oberflächen des piezoelektrischen Materials auftretenden positionsabhängigen Ladungsänderungen von der elektrisch leitenden teilungsbildenden Schicht und der Abstützschicht abgenommen
werden.

6. Meßanordnung nach Anspruch 1, dadurch
gekennzeichnet, daß das Schichtenpaket mehrere
nebeneinander bahnartig verlaufende inkrementale und/oder codierte teilungsbildende Schichten
aufweist, denen ebenfalls bahnartig verlaufende
voneinander elektrisch isolierte Kontaktschichten
zugeordnet sind.

7. Meßanordnung nach Anspruch 1, dadurch
gekennzeichnet, daß das Schichtenpaket an den
Rändern eingespannt ist, und eine konstante
Zugspannung auf das Schichtenpaket ausgeübt
wird.

**Claims**

1. Measuring arrangement for determining the
variation in position of two objects movable
relative to one another, by deformation of
piezoelectric material (6, 17), in which position-
dependant signals are generated by the relative
movement between a sensor and a force-applying
element (1, 15) acting on this sensor, wherein the
sensor is formed as a laminated pack (3, 11), in
the form of a measuring unit and at least one layer
(7) structured as a graduation is an integral
component of the laminated pack (3, 11), characterized in that the force-applying element is a
magnetic element (1, 15), which acts on the layer
(7) forming a graduation and in that this layer (7)
forming a graduation consists of magnetisable
and non-magnetisable regions (8, 13) arranged
alternately in the direction of movement of the
magnetic elements (1, 15), so that the magnetisable regions (8, 13) act on the piezoelectric
material (6, 17) formed as a layer and deform this.

2. Measuring arrangement according to
claim 1, characterized in that the layer (7) of the
laminated pack (3, 11) forming a graduation is an
incremental graduation and the magnetic element
(1, 15) also bears a graduation, whose graduation
period is equal to the graduation of the laminated
pack (3, 11) or a multiple of the graduation period
of the laminated pack (3, 11).

3. Measuring arrangement according to
claim 1, characterized in that the laminated pack
(3) consists of two electrically conducting contact
layers (4, 5) with a layer of piezoelectric material
(6) lying between these contact layers (4, 5) and in
that, on one of the outer sides of these contact
layers (4, 5) is disposed the layer (7) forming a
graduation with the magnetisable and non-magnetisable regions (8 and 9).

4. Measuring arrangement according to
claim 3, characterized in that on one electrically
conducting contact layer (4), on the side which is
turned away from the layer of piezoelectric material (6) there is provided the layer (7) forming a
graduation and on the other electrically conducting layer (5), on the side which is turned away
from the layer of piezoelectric material (6) there is
provided a support layer (10).

5. Measuring arrangement according to
claim 1, characterized in that the piezoelectric
material is arranged between an electrically conducting support layer and an electrically conducting layer forming a graduation and the charge
variations arising on the surface of the piezoelectric material are picked off by the electrically
conducting layer forming a graduation and the
support layer.

6. Measuring arrangement according to
claim 1, characterized in that the laminated pack
comprises a plurality of adjacent, track-like incremental and/or coded layers forming graduations,
which are associated with contact layers electrically insulated from one another, likewise track-
like.

7. Measuring arrangement according to
claim 1, characterized in that the laminated pack
is stressed at the edges and a constant tension is
exerted on the laminated pack.

**Revendications**

1. Dispositif de mesure pour détecter le changement de position de deux objets mobiles l'un
par rapport à l'autre par déformation d'une
matière piézoélectrique (6, 17), dans lequel le
déplacement relatif entre un capteur et un élément (1, 15) exerçant une force et agissant sur
ledit capteur génère des signaux dépendant de la
position, le capteur étant réalisé comme corps
stratifié (3, 11) sous forme d'une échelle de
mesure et au moins une couche (7) structurée
sous forme de graduation faisant partie intégrante
du corps stratifié (3, 11), caractérisé en ce que
l'élément exerçant une force est un élément
magnétique (1, 15) qui agit sur la couche (7)
formant graduation et que cette couche (7) formant graduation se compose de zones (8, 12 et 9,
13) influençables de façon magnétique et non
influençables de façon magnétique disposées en
alternance dans le sens de déplacement de
l'élément magnétique (1, 15), de sorte que les
zones (8, 13) influençables de façon magnétique
agissent sur la matière piézoélectrique (6, 17)
réalisée comme couche et déforment celle-ci.

2. Dispositif de mesure selon la revendication 1, caractérisé en ce que la couche (7) formant
graduation du corps stratifié (3, 11) est une
graduation incrémentale et l'élément magnétique
(1, 15) porte également une graduation dont la
période de graduation est égale à la graduation
du corps stratifié (3, 11) ou correspond à un
multiple de la période de graduation du corps
stratifié (3, 11).

3. Dispositif de mesure selon la revendication 1, caractérisé en ce que le corps stratifié (3)
se compose de deux couches de contact (4, 5)
électriquement conductrices avec une couche en
matière piézoélectrique (6) se trouvant entre ces
couches de contact (4, 5) et que sur l'une des
faces extérieures de ces couches de contact (4, 5)
est disposée la couche (7) formant graduation
avec les zones (8 et 9) influençables de façon magnétique et non influençables de façon magnétique.

4. Dispositif de mesure selon la revendication 3, caractérisé en ce que la couche (7) formant graduation est prévue sur une couche de contact (4) électriquement conductrice, sur le côté opposé à la couche en matière piézoélectrique (6), et une couche de support (10) est prévue sur l'autre couche de contact (5) électriquement conductrice, sur le côté opposé à la couche en matière piézoélectrique (6).

5. Dispositif de mesure selon la revendication 1, caractérisé en ce que la matière piézoélectrique est disposée entre une couche de support électriquement conductrice et une couche électriquement conductrice formant graduation et les modifications de charge, dépendant de la position et apparaissant à la surface de la matière piézoélectrique, sont captées par la couche électriquement conductrice formant graduation et la couche de support.

6. Dispositif de mesure selon la revendication 1, caractérisé en ce que le corps stratifié possède plusieurs couches incrémentales et/ou codées, formant graduation et s'étendant les unes à côté des autres comme des bandes, auxquelles sont associées des couches de contact isolées électriquement les unes des autres et s'étendant également comme des bandes.

7. Dispositif de mesure selon la revendication 1, caractérisé en ce que le corps stratifié est serré sur les bords et une tension de traction constante est exercée sur le corps stratifié.

FIG. 1

FIG. 2 Schnitt : II-II

12    13    17

11

16

15

14

FIG.3

12    13

II    II